# FASCICULE DE BREVET EUROPEEN

(11) **EP 0 486 369 B1**
(45) Date de publication et mention de la délivrance du brevet: **10.08.1994**
(21) Numéro de dépôt: 91402997.0
(22) Date de dépôt: 07.11.1991
(51) Int. Cl.: F16F 13/00

(54) **Manchon antivibratoire hydraulique**
Hydraulisches Buchsenlager gegen Schwingungen
Hydraulic anti-vibration bush

(30) Priorité: 13.11.1990 FR 9014056
(43) Date de publication de la demande: 20.05.1992
(73) Titulaire: HUTCHINSON, F-75384 Paris Cédex 08 (FR)
(72) Inventeur: Bouhier, Bernard, F-18100 Vierzon (FR); Thelamon, Jean, F-28800 Bonneval (FR)
(74) Mandataire: Behaghel, Pierre

(56) Documents cités:
- EP-A- 0 248 714
- EP-A- 0 296 062
- EP-A- 0 300 093
- EP-A- 0 388 520
- EP-A- 0 389 839
- GB-A- 2 207 215
- US-A- 4 693 456

## Description

L'invention est relative aux manchons antivibratoires hydrauliques comprenant deux armatures rigides tubulaires s'entourant l'une l'autre et de préférence de révolution au moins en partie, coaxiales et concentriques au moins sous charge, armatures réunies entre elles par un corps en élastomère conformé de façon à former avec celles-ci au moins deux poches étanches opposées diamétralement selon une direction D et communiquant entre elles par un canal étroit, l'ensemble desdites poches et dudit canal étant rempli d'un liquide amortisseur.

De tels manchons sont destinés à être montés entre deux pièces rigides solidarisables respectivement avec les deux armatures et susceptibles de subir l'une par rapport à l'autre des oscillations orientées selon la direction diamétrale D, l'ensemble étant agencé de façon telle que, pour certaines au moins de ces oscillations, le liquide soit refoulé alternativement de l'une des poches vers l'autre et inversement à travers le canal étroit, ce qui crée dans ce liquide, pour une fréquence donnée des oscillations, fréquence dont la valeur F est directement liée aux cotes dudit canal, un phénomène de résonance propre à amortir la transmission de ces oscillations de l'une des armatures à l'autre.

Les manchons du genre en question sont par exemple destinés à être interposés entre, d'une part, un châssis de véhicule et, d'autre part, le moteur à combustion interne ou le train avant ou arrière de ce véhicule.

L'invention concerne plus particulièrement, parmi les manchons ci-dessus, ceux dans lesquels, d'une part, la portion du corps en élastomère qui délimite l'une au moins des poches présente en section axiale la forme générale d'un U ou V ouvert radialement vers l'extérieur et est adhérée contre deux profilés annulaires rigides qui admettent pour axe l'axe de l'armature tubulaire externe et qui sont disposés respectivement à l'intérieur des deux extrémités axiales de cette armature, à proximité de ces extrémités, l'un au moins de ces deux profilés contenant le canal étroit ci-dessus et, d'autre part, la portion axialement centrale du corps en élastomère se présente sous la forme de deux bras s'étendant radialement entre les deux armatures et parallèlement aux axes de ces deux armatures.

De tels manchons ont été décrits dans le brevet EUROPE n° 0 248 714.

Dans les modes de réalisation connus desdits manchons, le canal étroit est :
- soit unique et constitué par une partie au moins de l'un des deux profilés annulaires,
- soit dédoublé, c'est-à-dire composé de deux tronçons en parallèle et appartenant respectivement aux deux profilés annulaires.

Dans ces conditions, le rapport R entre la longueur du canal étroit unique (ou de chacun de ses composants, si ce canal est dédoublé) et sa largeur, ou diamètre équivalent, est relativement faible, savoir en général inférieur à 100.

Pour certaines applications, on désire augmenter le rapport R tout en conservant pour le diamètre équivalent du canal étroit une valeur suffisamment élevée pour que la masse de liquide concernée par les phénomènes de résonance assurant l'amortissement demeure suffisante.

C'est par exemple le cas lorqu'on désire assurer un amortissement efficace d'oscillations à basse fréquence telles que celles, comprises entre 5 et 20 Hz, engendrées sur un véhicule en roulement par les irrégularités de la route (hachis).

A cet effet, on profite du fait que l'on dispose dans les supports considérés de deux profilés annulaires pour les exploiter tous les deux aux fins de constitution de la "colonne liquide" exploitée pour assurer l'amortissement.

A cet effet, les manchons du genre en question selon l'invention sont essentiellement caractérisés en ce que leur canal étroit comprend en série deux tronçons appartenant respectivement aux deux profilés annulaires et un raccord reliant entre eux ces deux tronçons et s'étendant axialement le long du bord extérieur de l'un des deux bras radiaux constitutifs du corps en élastomère.

Dans des modes de réalisation avantageux, on a recours en outre à l'une et/ou à l'autre des dispositions suivantes :
- les deux profilés annulaires et le raccord forment ensemble une cage cylindrique rigide solidarisée avec l'armature tubulaire externe et dont le raccord constitue un barreau,
- la cage est constituée de deux moitiés juxtaposées axialement,
- les embouchures du canal étroit dans les deux poches sont disposées à proximité du raccord, angulairement de part et d'autre de ce raccord,
- la liaison entre le raccord et chaque tronçon annulaire est dessinée de façon à éviter tout changement brusque de direction pour l'écoulement du liquide,
- le canal étroit est constitué par un tuyau incurvé et coudé.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation de l'invention en se référant aux dessins ci-annexés d'une manière bien entendu non limitative.

Les figures 1 et 2, de ces dessins, montrent un manchon antivibratoire hydraulique établi selon l'invention, respectivement en coupe axiale selon I-I figure 2 et en coupe transversale selon II-II figure 1.

La figure 3 montre en vue perspective ledit manchon, armature tubulaire externe enlevée.

La figure 4 est un schéma montrant le trajet suivi par le canal étroit compris par le manchon ci-dessus.

Le manchon en question comprend :
- une armature métallique tubulaire interne de révolution 1,
- une armature métallique tubulaire externe de révolution 2 qui entoure l'armature 1 et qui, pour l'état monté et chargé du manchon, peut être coaxiale à cette armature 1, les axes des deux armatures étant de toute façon parallèles entre eux au repos du manchon,
- et un corps en élastomère 3 reliant l'une à l'autre les deux armatures 1 et 2 en ménageant entre celles-ci deux poches étanches A,B diamétralement opposées selon une direction D.

L'armature interne 1 est destinée à être solidarisée avec une broche (non représentée) qui la traverse jointivement alors que l'armature externe 2 est destinée à être solidarisée avec un palier (non représenté), cette broche et ce palier étant solidaires respectivement de deux éléments rigides entre lesquels on désire monter un support antivibratoire, éléments tels qu'un moteur de véhicule et que le châssis de ce véhicule.

Une portion du corps 3, qui est supposée ici à titre purement illustratif être sa moitié supérieure, présente sous charge une forme de révolution autour de l'axe commun aux deux armatures 1 et 2 avec une demi-section axiale en forme de U ou de V, deux gorges 4 peu profondes ouvertes axialement vers l'extérieur du manchon étant évidées dans les deux parois frontales 5 de ladite portion.

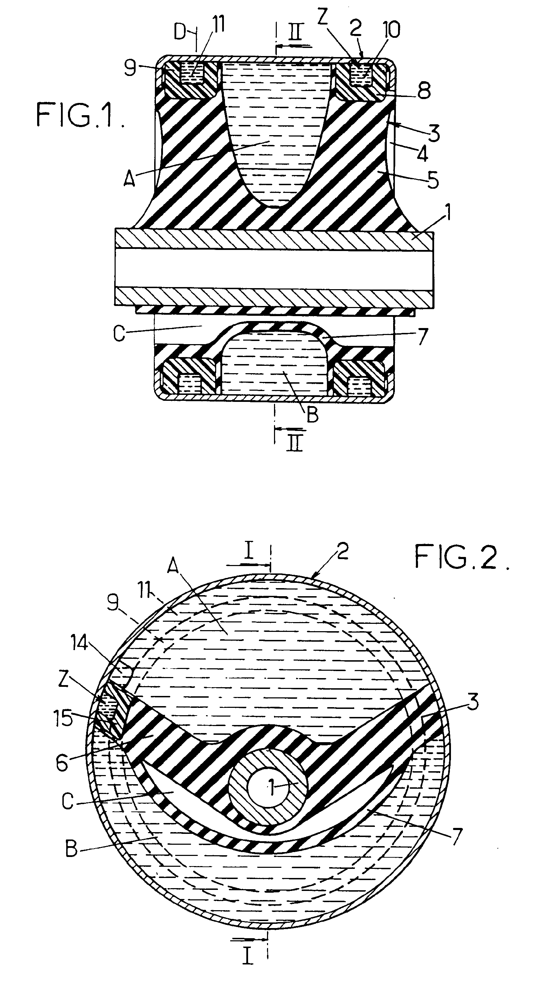

Cette portion comprend également deux bras ou voiles radiaux 6 s'étendant parallèlement aux axes des armatures tubulaires et diamétralement opposés ou s'étendant selon un V largement ouvert ainsi que visible sur la figure 2, bras qui délimitent avec les parois 5 et l'armature externe 2 la chambre A.

La portion du corps 3 qui délimite la chambre B est constituée par une membrane flexible mince 7.

Cette membrane se présente sous la forme d'un bandeau incurvé en demi-cercle et légèrement bombé vers l'axe. Ce bandeau présente deux bords semi-circulaires reliés de façon étanche à l'armature externe 2 et les deux extrémités dudit bandeau considérées selon la direction circonférentielle sont raccordées aux bras radiaux 6, une poche C ouverte axialement à l'air libre étant ainsi ménagée entre ces bras et la membrane 7.

Les portions, du corps 3 en élastomère, correspondant aux extrémités des deux bras du U ou V sont adhérées contre deux profilés circulaires 8, 9 présentant une section droite en U ouverte radialement vers l'extérieur.

Ces profilés sont coiffés de façon étanche par les extrémités axiales de l'armature tubulaire externe 2 de façon à former deux canaux circulaires étroits 10,11.

Au lieu d'être indépendants l'un de l'autre, comme dans les modes de réalisation connus, les deux canaux 10 et 11 sont ici reliés en série par un raccord intermédiaire 12, ce qui forme un canal unique et relativement long Z.

Le raccord 12 s'étend parallèlement aux axes des armatures tubulaires, le long du bord extérieur de l'un des deux bras ou voiles radiaux 6.

Ainsi la totalité du volume, de chacune des poches A et B, intérieur à la portion centrale de l'armature extérieure 2, demeure dégagé, ce qui rend possibles de grands débattements radiaux du manchon, pour un diamètre extérieur donné de celui-ci.

De plus, la construction générale du manchon n'est aucunement compliquée par la présence dudit raccord 12, lequel complète harmonieusement le bras radial 6 qu'il borde, en étant par exemple simplement évidé dans ce bord ou en constituant une armature latérale dudit bras.

Les deux extrémités du canal unique Z débouchent respectivement dans les deux poches A et B par deux orifices 13,14 pratiqués respectivement dans les deux profilés 8 et 9.

Les chambres A et B ainsi que le canal Z qui les relie sont remplis d'un liquide amortisseur, généralement d'un type antigel.

Dans le mode de réalisation illustré, le raccord 12 est constitué par un barreau longitudinal rectiligne 15 d'une cage cylindrique rigide ajourée composée de ce barreau et des deux profilés annulaires 8 et 9.

Le canal étroit Z est alors constitué par une suite de rainures et rigoles creusées dans la face cylindrique extérieure de ladite cage et toutes coiffées de façon étanche par l'armature tubulaire externe 2.

Le barreau longitudinal 15 est disposé le long du bord extérieur de l'un des deux voiles 6 en matériau élastomère, lequel voile est adhéré sur ledit barreau.

Comme visible sur les figures 2, 3 et 4, les embouchures du canal étroit Z dans les deux chambres A et B sont de préférence angulairement voisines du barreau 15, qu'elles encadrent angulairement, de sorte que chaque tronçon de profilé 8 ou 9 constitutif du canal Z s'étend sur un arc voisin de 360° autour de l'axe du manchon et que la longueur relative du canal Z est ainsi relativement élevée.

Cette longueur peut être facilement plus de deux fois plus grande que la longueur des canaux étroits uniques habituels.

En particulier, si l'on appelle L cette longueur et D le diamètre équivalent du canal étroit considéré, on peut donner au rapport R de ladite longueur L sur ledit diamètre équivalent D une valeur très largement supérieure à 100 et comprise avantageusement entre 150 et 300.

De ce fait, il est possible d'amortir avec les manchons considérés les oscillations présentant une fréquence relativement basse telle que celles, de fréquence généralement comprise entre 5 et 20 Hz, imposées à un véhicule en roulement par les irrégularités de la route (hachis).

En suite de quoi, et quel que soit le mode de réalisation adopté, on dispose finalement d'un manchon antivibratoire hydraulique dont la constitution, le fonctionnement et les avantages résultent suffisamment de ce qui précède.

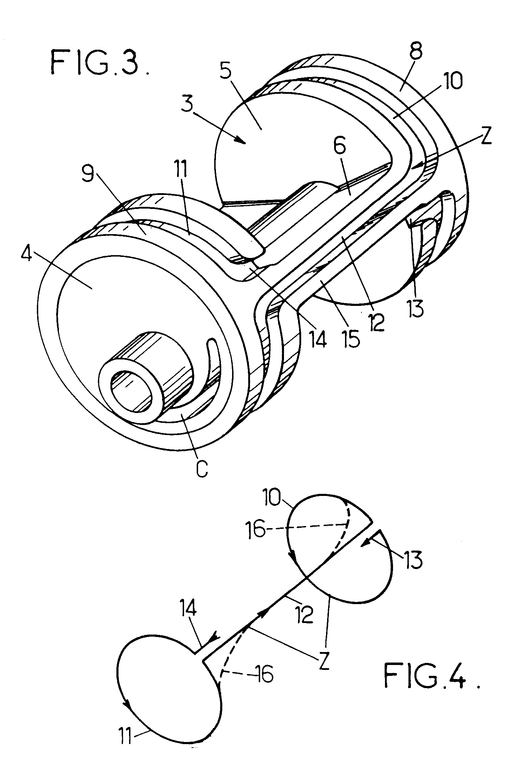

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment:
- celles où, pour réduire les pertes de charge appliquées sur le liquide circulant dans le canal étroit, la liaison entre le raccord central et chaque tronçon annulaire serait dessinée de façon à éviter tout changement brusque de direction pour l'écoulement de liquide, le barreau constitutif de la cage rigide ajourée n'étant alors plus rectiligne et longitudinal, mais incliné de façon à réduire l'angle de raccordement entre chacune de ses extrémités et le tronçon annulaire adjacent, ou même conformé en S comme représenté en traits interrompus 16 sur la figure 4,
- celles où la cage rigide ajourée serait, non pas monobloc, mais composée de deux moitiés, identiques ou non, juxtaposées axialement et assemblées mutuellement par le moulage du corps en élastomère,
- et celles où les "profilés annulaires" définissant les deux tronçons terminaux en arc de cercle du canal étroit seraient constitués autrement que de la façon ci-dessus décrite et illustrée et présenteraient par exemple en section droite la forme d'un U ouvert vers l'extérieur du manchon selon la direction de l'axe de son armature tubulaire externe, la gorge qui définit chaque tronçon terminal en arc de cercle étant alors refermée par une rondelle plate transversale rapportée axialement contre elle, ou encore la forme d'une courbe fermée continue, notamment d'un cercle, la totalité du canal pouvant alors être délimitée par un même tuyau recourbé et coudé.

## Revendications

1. Manchon antivibratoire hydraulique comprenant deux armatures rigides tubulaires (1,2) s'entourant l'une l'autre et réunies entre elles par un corps en élastomère (3) conformé de façon à former avec celles-ci au moins deux poches étanches (A,B) opposées diamétralement et communiquant entre elles par un canal étroit (Z), l'ensemble desdites poches et dudit canal étant rempli d'un liquide amortisseur, la portion du corps en élastomère qui délimite l'une au moins des poches (A) présentant en section axiale la forme générale d'un U ou V ouvert radialement vers l'extérieur et étant adhérée contre deux profilés annulaires rigides (8,9) qui admettent pour axe l'axe de l'armature tubulaire externe (2) et qui sont disposés respectivement à l'intérieur des deux extrémités axiales de cette armature, à proximité de ces extrémités, l'un au moins de ces deux profilés contenant le canal étroit ci-dessus, et la portion axialement centrale du corps en élastomère se présentant sous la forme de deux bras (6) qui s'étendent radialement entre les deux armatures, parallèlement aux axes de ces armatures, caractérisé en ce que le canal étroit (Z) comprend en série deux tronçons (10,11) appartenant respectivement aux deux profilés annulaires (8,9) et un raccord (12) reliant entre eux ces deux tronçons et s'étendant axialement le long du bord extérieur de l'un des deux bras radiaux (6) constitutifs du corps en élastomère.

2. Manchon antivibratoire selon la revendication 1, caractérisé en ce que les deux profilés annulaires (8,9) et le raccord (12) forment ensemble une cage cylindrique rigide solidarisée avec l'armature tubulaire externe (2) et dont le raccord constitue un barreau (15).

3. Manchon antivibratoire selon la revendication 2, caractérisé en ce que la cage est constituée de deux moitiés juxtaposées axialement.

4. Manchon antivibratoire selon l'une quelconque des précédentes revendications, caractérisé en ce que les embouchures (13,14) du canal étroit (Z) dans les deux poches (A,B) sont disposées à proximité du raccord (12), angulairement de part et d'autre de ce raccord.

5. Manchon antivibratoire selon l'une quelconque des précédentes revendications, caractérisé en ce que la liaison entre le raccord et chaque tronçon annulaire est dessinée de façon à éviter tout changement brusque de direction pour l'écoulement du liquide.

6. Manchon antivibratoire selon la revendication 1, caractérisé en ce que le canal étroit est délimité sur toute son étendue par un même tuyau incurvé et coudé.

## Patentansprüche

1. Hydraulische Antischwingungsbuchse, die aus folgenden Teilen besteht: zwei starren, rohrförmigen Armaturen (1, 2), von denen die eine die andere umgibt und die miteinander über einen Körper (3) aus elastomerem Material verbunden sind, der so ausgebildet ist, daß er zusammen mit diesen wenigstens zwei dichte Taschen (A, B) bildet, die sich diametral gegenüberliegen und miteinander über einen engen Durchgang (Z) in Verbindung stehen, wobei die Taschen und der Durchgang mit einer Dämpfungsflüssigkeit gefüllt sind und der Abschnitt des Körpers aus elastomerem Material, der wenigstens eine der Taschen (A) begrenzt, einen axialen Querschnitt aufweist, der die allgemeine Form eines U oder V hat, das radial nach außen offen ist und an zwei ringförmigen starren Profilen (8, 9) angebracht ist, die als Achse die Achse der äußeren rohrförmigen Armatur (2) haben und die jeweils im Inneren der beiden axialen Enden dieser Armatur in der Nähe ihrer Enden angeordnet sind, wobei ferner wenigstens eins der beiden Profile den erwähnten engen Durchgang enthält und der mittlere axiale Abschnitt des Körpers aus elastomerem Material die Form von zwei Armen (6) hat, die sich radial zwischen den beiden Armaturen, parallel zu deren Achsen erstrecken, dadurch gekennzeichnet, daß der enge Durchgang (Z) in Reihe zwei Abschnitte (10, 11), die jeweils an den beiden ringförmigen Profilen (8, 9) vorhanden sind, und ein Verbindungsstück (12) enthält, das diese beiden Abschnitte miteinander verbindet und sich axial längs des äußeren Randes einer der beiden radialen Arme (6) erstreckt, die Bestandteil des Körpers aus elastomerem Material sind.

2. Antischwingungsbuchse nach Anspruch 1, dadurch gekennzeichnet, daß die beiden ringförmigen Profile (8, 9) und das Verbindungsstück (12) gemeinsam einen starren zylindrischen Käfig bilden, der mit der äußeren rohrförmigen Armatur (2) fest verbunden ist und deren Verbindungsstück einen Stab (15) bildet.

3. Antischwingungsbuchse nach Anspruch 2, dadurch gekennzeichnet, daß der Käfig aus zwei axial nebeneinanderliegenden Hälften besteht.

4. Antischwingungsbuchse nach einem der vorhergehenden Ansprüche, dadurch gekennzeichnet, daß die Mündungen (13, 14) des engen Durchganges (Z) in die beiden Taschen (A, B) in der Nähe des Verbindungsstückes (12) winklig auf beiden Seiten des Verbindungsstückes angeordnet sind.

5. Antischwingungsbuchse nach einem der vorhergehenden Ansprüche, dadurch gekennzeichnet, daß die Verbindung zwischen dem Verbindungsstück und jedem ringförmigen Abschnitt so ausgebildet ist, daß jeder schlagartige Wechsel der Richtung für das Abfließen der Flüssigkeit vermieden wird.

6. Antischwingungsbuchse nach Anspruch 1, dadurch gekennzeichnet, daß der enge Durchgang über seine gesamte Erstreckung durch ein und dasselbe kurvenförmig verlaufende und gebogene Rohr begrenzt wird.

## Claims

1. A hydraulic anti-vibration sleeve comprising two rigid tubular members (1, 2) disposed one inside the other and interconnected by an elastomer body (3) shaped so as to cooperate therewith to form at least two diametrically opposite watertight pockets (A, B) which communicate with each other via a narrow channel (Z), both of said pockets and said channel being filled with a damping liquid, the portion of the elastomer body that delimits at least one of the pockets (A) being generally U-shaped or V-shaped in axial section and being open radially outwards, which portion is bonded to two rigid annular section members (8, 9) which have the same axis as the axis of the outer tubular member (2) and which are disposed inside respective ones of the two axial ends of said tubular member in the vicinity of said ends, at least one of said two section members containing the above narrow channel, and the axially central portion of the elastomer body being in the form of two arms (6) which extend radially between the two tubular members, parallel to the axes of said tubular members, the sleeve being characterized in that the narrow channel (Z) comprises, in series: two lengths (10, 11) belonging to respective ones of the two annular section members (8, 9); and a connection (12) interconnecting said two lengths and extending axially along the outside edge of one of the two radial arms (6) constituting the elastomer body.

2. An anti-vibration sleeve according to claim 1, characterized in that the two annular section members (8, 9) and the connection (12) together form a rigid cylindrical cage which is fixed to the outer tubular member (2) with the connection constituting a bar (15) of the cage.

3. An anti-vibration sleeve according to claim 2, characterized in that the cage is constituted by two axially juxtaposed halves.

4. An anti-vibration sleeve according to any one of the preceding claims, characterized in that the openings (13, 14) of the narrow channel (Z) opening out into the two pockets (A, B) are disposed close to the connection (12) and angularly on opposite sides of the connection.

5. An anti-vibration sleeve according to any one of the preceding claims, characterized in that the connection runs smoothly into each of the annular lengths so as to avoid any sudden change in liquid flow direction.

6. An anti-vibration sleeve according to claim 1, characterized in that the narrow channel is defined over its entire length by a single pipe that is curved and bent.
